# EUROPEAN PATENT APPLICATION

(11) **EP 4 438 268 A1**
(43) Date of publication of application: **02.10.2024**
(21) Application number: 24167172.6
(22) Date of filing: 28.03.2024
(51) Int. Cl.: B29C 63/06, B29C 63/14

(54) **APPARATUS FOR COVERING PIPE SECTIONS FOR INSULATION**

(30) Priority: 31.03.2023 IT 202300006267
(71) Applicant: Gamma Meccanica S.P.A., 42021 Bibbiano (Frazione Ghiardo) (IT)
(72) Inventor: RAVAZZINI, Stefano, 42014 CASTELLARANO RE (IT); BURINI, Davide, 42021 BIBBIANO RE (IT)
(74) Representative: Modiano, Micaela Nadia

(57) **Abstract**

An apparatus (1) for covering pipe sections for insulation, the pipe section (C) comprising a cladding (M) extending about a longitudinal axis (A) and provided with a longitudinal cut (T);
the apparatus (1) comprises a supporting frame (2) for supporting a work surface (3) for resting at least one covering sheet (R) made of flexible material, which has an adhesion face (F) adapted to be directed upward and has an extension at least equal to the external extension of the cladding (M) of a pipe section (C) being processed, and a transfer assembly (4) for transferring the pipe section (C) being processed which is resting on the adhesion face (F) in combined rotation and translation along a work direction (D) substantially parallel to the work surface (3).

Such transfer assembly (4) comprises guiding means (6) for guiding the pipe section (C) being processed in rotation about its own longitudinal axis (A), which are positioned above the work surface (3), and means for actuation (7) of the guiding means (6) in translation along at least one wrapping stroke that lies along the work direction (D).

The transfer assembly (4) comprises adjustment means which are functionally associated with the means for actuation (7) so as to obtain a variation of the wrapping stroke imparted to the guiding means (6).

## Description

The present invention relates to an apparatus for covering pipe sections for insulation.

Pipe sections for the thermal insulation of ducts are known which are substantially constituted by sleeves provided with a longitudinal cut and made of deformable thermally insulating material (e.g. rock wool or glass wool), and which are adapted to be forced open in order to be fitted over ducts to be insulated, and are then closed back up. The inside diameter and the length of the pipe section depend on the dimensions of the duct to be insulated, while its thickness can vary as a function of the degree of thermal insulation that it is desired to obtain, and is also based on the characteristics of the material used.

In order to increase the degree of insulation that can be obtained, it is known to apply covering sheets made of a flexible thermally insulating material, e.g. aluminum or fabric made of rock wool or glass wool, on the outer cladding of such pipe sections.

Such covering sheets are provided with an adhesion face adapted to be stably associated in adhesion to the outer cladding of the pipe section by way of a layer of thermoplastic adhesive, for example polyethylene-based, bonded with the adhesion face, or by means of the interposition of a glue, spread in advance on the adhesion face. If covering sheets associated with a layer of thermoplastic adhesive are used, a preliminary heating of the sheet needs to be performed so as to obtain the softening of the adhesive.

Such sheets are generally quadrangular, with a pair of first opposite sides of length substantially equal to the axial length of the pipe section and a pair of second opposite sides of length substantially equal to the length of the outer cladding of the pipe section increased by a segment defining a flap which is left free and is used after the covered pipe section has been positioned on the duct to be insulated in order to close it on itself.

In order to execute a processing cycle, the pipe section needs to be preliminarily positioned with one of the edges of the longitudinal cut substantially matched up with a first side of the corresponding covering sheet and with the corresponding longitudinal margins at the second sides of the same sheet.

Various apparatuses are known which make it possible to semiautomatically execute the covering of pipe sections for insulation with covering sheets.

For example a first type of apparatus is known which substantially consists of a supporting frame of a worktop, on which the covering sheet is positioned with the adhesion face directed upward, and a transfer assembly for transferring the pipe section to be covered above the worktop, which is adapted to actuate the pipe section in combined rotation and translation along the adhesion face of the sheet in order to obtain the adhesion to the outer cladding of that pipe section.

The worktop can be provided with heating means, if using covering sheets combined with a layer of thermoplastic adhesive.

The transfer assembly comprises guiding means for guiding the pipe section in rotation about the corresponding longitudinal axis, and means for actuation with alternating translation of these guiding means along a work direction which is substantially parallel to the worktop.

Such means for actuation comprise a fixed-travel pneumatic cylinder with the movable shank associated with the guiding means and lying along the work direction.

The dimensioning of the pneumatic cylinder defines the working stroke of the corresponding movable shank, which determines the maximum dimension of the outside diameter of the pipe section that can be covered using the apparatus.

This type of conventional apparatus is not devoid of drawbacks, among which is the fact that the fixed work travel of the actuation cylinder limits the dimension of the pipe sections that can be processed and, for pipe sections of external diameter lower than this maximum dimension, it results in wasted time and increased energy consumption to power the apparatus with respect to what is strictly necessary, in that the shaft executes a section of travel that is empty.

Furthermore, the translation speed imparted to the guiding means is also fixed, therefore if a covering sheet is used which is combined with a layer of thermoplastic adhesive, there is a risk that it is not kept in contact with the heated worktop for a sufficient time to obtain an adequate softening of the adhesive as the thicknesses and the characteristics of the materials in use vary.

Alternatively, a second type of apparatus is known which is substantially provided with a supporting frame for a perforated worktop associated with suction means, on which a covering sheet is positioned with its adhesion face directed upward for spreading with glue, and with an assembly for the rotational support of the pipe section to be covered, which is brought to the sheet and actuated manually to rotate about its own longitudinal axis in order to pull the sheet to slide along the worktop and make the pipe section wrap around the outer cladding.

This type of apparatus does not make it possible to have control over the time and speed of wrapping the covering sheet onto the pipe section.

Also, this apparatus does not allow the possibility of heating the worktop, therefore it is necessary to use glue in order to obtain the adhesion of the covering sheet to the pipe section, with consequent risks to the health of the operators who have to handle such substances, complications in the apparatuses which need to have sufficient vapor extraction systems, and greater costs deriving from cleaning and maintenance of the apparatuses.

Furthermore, in both types of known apparatuses, the operator is responsible for visually checking the correct positioning of the pipe section with respect to the covering sheet on the worktop, prior to starting the processing cycle. The quality of the manufactured articles obtained and the time required to execute each work cycle are strongly influenced by the operator experience and skill.

Last but not least, the manual operations required to the operators bring considerable risks of receiving injury, for example as a consequence of impacts from or being crushed by moving parts.

The aim of the present invention is to eliminate the above-mentioned drawbacks in the background art by providing an apparatus for covering pipe sections for insulation which is adapted to execute control and adjustment of the processing parameters in order to limit the losses of time and energy consumption and to optimize the results obtained, in terms both of quality of the product and of productivity of the process.

Within this aim, an object of the present invention is to provide an apparatus for covering pipe sections for insulation which makes it possible not to introduce limitations of the format of the pipe sections to be covered.

Another object of the present invention is to provide an apparatus for covering pipe sections for insulation which is adapted to ensure a correct positioning of the pipe section and of the corresponding covering sheet in order to obtain a high and constant level of quality of the manufactured articles obtained, by reducing, or even eliminating, the formation of production discards.

Another object of the present invention is to provide an apparatus for covering pipe sections for insulation which makes it possible to limit the operator intervention and to ensure high safety conditions in the execution of their duties.

Another object of the present invention is to provide an apparatus for covering pipe sections for insulation which offers a simple structure, is easy and practical to implement, safe in use and effective in operation, and at low cost.

This aim and these and other objects which will become more apparent below are all achieved by the present apparatus for covering pipe sections for insulation according to claim 1, and optionally provided with one or more of the characteristics recited in the subsequent dependent claims.

Further characteristics and advantages of the present invention will become more apparent from the detailed description of two preferred, but not exclusive, embodiments of an apparatus for covering pipe sections for insulation according to the present invention, which are illustrated for the purposes of non-limiting example in the accompanying drawings wherein:
Figure 1 is a perspective view of a first embodiment of an apparatus for covering pipe sections for insulation, according to the invention;
Figure 2 is a perspective view of the apparatus of Figure 1 in a first operating step of a processing cycle for covering a pipe section;
Figure 3 is an additional perspective view of the apparatus of Figures 1 and 2 from a different angle;
Figure 4 is a front elevation view of the apparatus in Figure 2;
Figure 5 is a cross-sectional view taken along the line V-V in Figure 4;
Figure 6 is a perspective view of the apparatus of Figure 1 in a second operating step of the processing cycle;
Figure 7 is a front elevation view of the apparatus in Figure 6;
Figure 8 is a cross-sectional view taken along the line VIII-VIII in Figure 7;
Figure 9 is a cross-sectional view as the view in Figure 8, but in a third operating step of the processing cycle;
Figure 10 is a perspective view of the apparatus of Figure 1 in a fourth operating step of the processing cycle;
Figure 11 is a cross-sectional view taken along a longitudinal central plane of the apparatus of Figure 10;
Figure 12 is a perspective view of the apparatus of Figure 1 in a fifth operating step of the processing cycle;
Figure 13 is a cross-sectional view taken along a longitudinal central plane of the apparatus of Figure 12;
Figure 14 is a perspective view of a second embodiment of the apparatus according to the invention;
Figure 15 is a perspective view of the apparatus of Figure 14 in the first operating step of the processing cycle;
Figure 16 is an additional perspective view from a different angle of the apparatus of Figure 15;
Figure 17 is a front elevation view of the apparatus in Figure 15;
Figure 18 is a cross-sectional view taken along the line XVIII-XVIII of Figure 17;
Figure 19 is a perspective view of the apparatus of Figure 14 in the second operating step of the processing cycle;
Figure 20 is a front elevation view of the apparatus in Figure 19;
Figure 21 is a cross-sectional view taken along the line XXI-XXI in Figure 20;
Figure 22 is a perspective view of the apparatus of Figure 14 in the fourth operating step of the processing cycle;
Figure 23 is a cross-sectional view taken along a longitudinal central plane of the apparatus of Figure 22;
Figure 24 is a perspective view of a pipe section covered with a covering sheet at the end of the processing cycle executed using the apparatus according to the invention;
Figures 25 and 26 are enlarged-scale perspective views of an end portion of the pipe section and of the corresponding covering sheet during the application and at the end of the processing cycle.

With reference to the figures, the reference number 1 generally designates an apparatus for covering pipe sections for insulation.

The apparatus 1 is adapted to process conventional pipe sections C which are substantially constituted by a cladding M which extends about a longitudinal axis A and is provided with a longitudinal cut T. Generally the cladding M has a transverse cross-section which is substantially an annulus. Such pipe sections C are generally made of a deformable thermally insulating material, such as rock wool or glass wool.

The apparatus 1 comprises a supporting frame 2 for supporting a work surface 3 for resting at least one covering sheet R made of flexible material, which has an adhesion face F directed upward and has an extension at least equal to the external extension of the cladding M of a pipe section C being processed, and further comprising a transfer assembly 4 for transferring the pipe section C being processed which is resting on the adhesion face F in combined rotation and translation along a work direction D substantially parallel to the work surface 3.

In the present description the term "substantially" means "except for the usual machining tolerances and tolerances in the assembly of the component parts".

In the illustrated embodiments, the frame 2 consists substantially of a structure of beams defining a form of footing which rests on feet 5, but the possibility is not ruled out of its being structured and shaped differently.

The work surface 3 consists preferably of a table top. The work surface 3 preferably has a substantially horizontal arrangement.

Preferably the apparatus 1 comprises heating means associated with the work surface 3 for transmitting heat to the covering sheet R resting thereupon, such heating means not being shown or described in detail in that they are of conventional type.

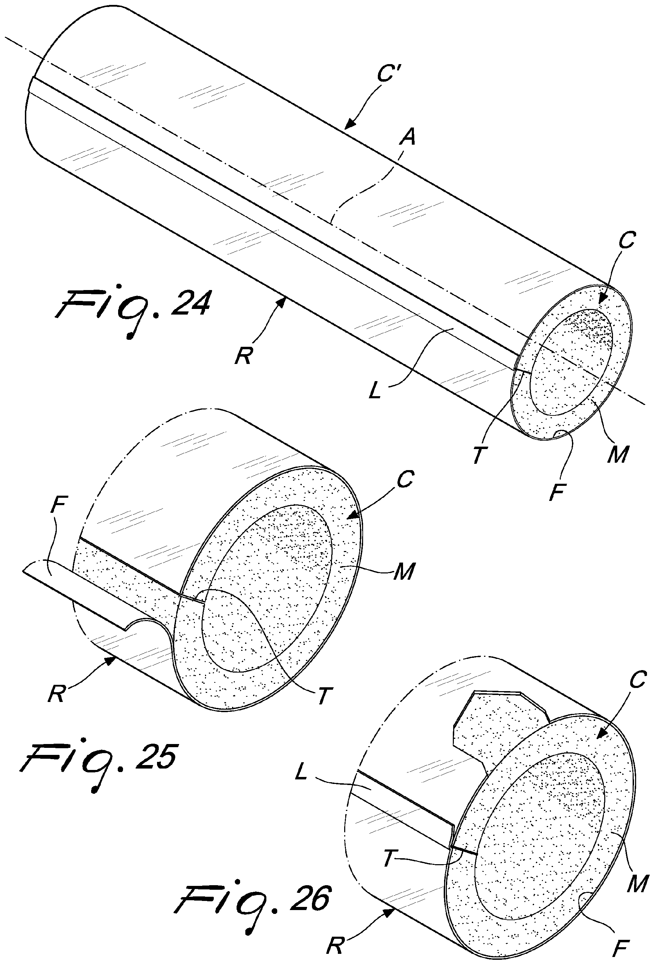

The covering sheet R is substantially quadrangular, preferably rectangular, with a pair of first opposite sides substantially equal to the longitudinal extension of the pipe section C to be covered and a pair of second opposite sides equal to the outer length of the cladding M of the pipe section increased by a segment adapted to define a flap L which remains free when the covering sheet R is completely wrapped around the pipe section C so as to obtain a covered pipe section C' (Figures 24-26). When the covered pipe section C' is positioned around a duct to be insulated, the flap L is closed thereupon with the interposition of glue or adhesive tape in order to keep the pipe section tightly on the duct.

The covering sheet R comprises at least one layer of thermally insulating material such as aluminum, rock wool or glass fibers.

The covering sheet R can be cut to size from a roll of covering material wound on a spool as a function of the dimensions of the pipe section C being processed, or it can be already made to size.

The covering sheet R can have a layer of thermoplastic adhesive material bonded to the adhesion face F of the at least one layer of thermally insulating material. Alternatively, glue can be spread on the adhesion face F beforehand.

The work direction D preferably has a substantially horizontal arrangement.

The transfer assembly 4 comprises guiding means 6 for guiding the pipe section C being processed in rotation about its own longitudinal axis A, which are positioned above the work surface 3, and actuation means 7 for activating the guiding means 6 in translation along at least one wrapping stroke that lies along the work direction D, from an initial position to a final position.

Advantageously the transfer assembly 4 comprises adjustment means which are functionally associated wit the actuation means 7 so as to obtain a different extension of the wrapping stroke imparted to the guiding means 6.

In this manner the length of the wrapping stroke, i.e. the distance between the initial position and the final position assumed by the guiding means 6 and, therefore, by the pipe section C along the work direction D during the processing, can be set or selected as a function of the effective dimensions of the pipe section and can be substantially equal to the extension of the outer circumferential extension of its cladding M.

In this manner the transfer assembly 4 does not place limitations on the maximum dimensions of the pipe sections that can be processed, and makes it possible to optimize the processing times and the energy consumption.

Preferably the actuation means 7 are of the bidirectional type and are adapted to impart to the guiding means 6 also a return stroke which lies along the work direction D in the opposite direction to the wrapping stroke. The return stroke extends from the final position to the initial position along the work direction D.

In more detail, the actuation means 7 comprise a driving element 8 and a transmission assembly 9 for moving the guiding means 6. The transmission assembly 9 is associated in input with the driving element 8 and in output with the guiding means 6. The adjustment means are functionally associated with the driving element 8.

Such adjustment means can comprise, for example, an electronic control unit such as a conventional PLC in which the processing parameters for activating the driving element 8 can be set/stored.

In the preferred embodiment the driving element 8 comprises a rotating shaft, not visible in the figures, and the transmission assembly 9 comprises a driving pulley 11 coupled to the rotating shaft, at least one driven pulley 12 is supported idle in rotation by the frame 2, and a flexible transmission element 13 which is closed on itself in a loop and is wound on the pulleys 11 and 12. The flexible transmission element 13 is associated with the guiding means 6 so as to move them in translation along the work direction D.

The rotating shaft is coupled to the transmission assembly 9 by virtue of the interposition of a conventional gear reduction assembly 10.

The flexible element 13 can be a chain, a belt or the like.

The driving element 8 can be a conventional electric motor, preferably associated with an inverter.

The adjustment means communicate the work stroke, defined as a function of the size of the pipe section C being processed, to the inverter in order to actuate the electric motor 8.

Even more preferably, the driving element 8 is of the variable speed type in order to be capable of modifying the travel time of the wrapping stroke. In this case, the adjustment means communicate the speed set/selected to consequently actuate the electric motor 8 to the inverter as well.

The actuation means 7 comprise at least one guiding element 23 associated with the frame 2 and arranged substantially parallel to the work direction D, and a bogie 24 associated so that it can slide with the at least one guiding element 23 and carrying the guiding means 6. The bogie 24 is integral with a portion of the flexible element 13 so as to be moved along the work direction D following the actuation of the driving element 8.

More precisely, two guiding elements 23, linear in shape, are provided which are arranged one under the other on a side of the frame 2 with which the bogie 24 is associated so that it can slide by means of corresponding runners.

The bogie 24 carries an L-shaped structure formed by a post 25 and by a cross-member 26, and is positioned above the work surface 3 and transversely to the work direction D, carrying the guiding means 6.

Advantageously, the apparatus 1 also comprises reference means 14 for the initial positioning of the pipe section C and/or of the corresponding covering sheet R.

Such reference means 14 have a profile 15 which extends substantially transversely to the work direction D and is movable between an active position, in which it is protruding upward from the work surface 3, and an inactive position, in which it is at an elevation equal to or lower than that surface.

The profile 15 is substantially linear in extension. The profile 15 is substantially horizontal and is perpendicular to the work direction D.

The reference means 14 also comprise first movement means 16 for moving the profile 15 between the active position and the inactive position. Such first movement means 16 can comprise for example one or more actuators with the corresponding movable shank arranged substantially vertically.

The first movement means 16 are associated with the frame 2 below the work surface 3.

At the start of the processing cycle, with the profile 15 in the active position, the covering sheet R is positioned upon the work surface 3 with a corresponding first side abutting against a flank of the profile 15, and the pipe section C is positioned with the corresponding T-cut directed downward and fitted over the profile itself, so as to keep it in the initial position without requiring the presence of an operator.

In this manner the pipe section C and the covering sheet R are correctly positioned to begin the processing.

The profile 15 is then brought to the inactive position in order to release the pipe section C and allow its combined rotation and translation on the covering sheet R along the wrapping stroke. If the means for actuation 7 are of the bidirectional type, the profile 15 is returned to the active position during the return stroke in order to prevent the covered pipe section C' from falling off the work surface 3.

The reference means 14 can also have at least one guiding shoulder 17 which is substantially parallel to the work direction D and protruding upward from the work surface 3.

The covering sheet R can then be arranged on the work surface 3 with a corresponding second edge aligned with the shoulder 17 or resting against it.

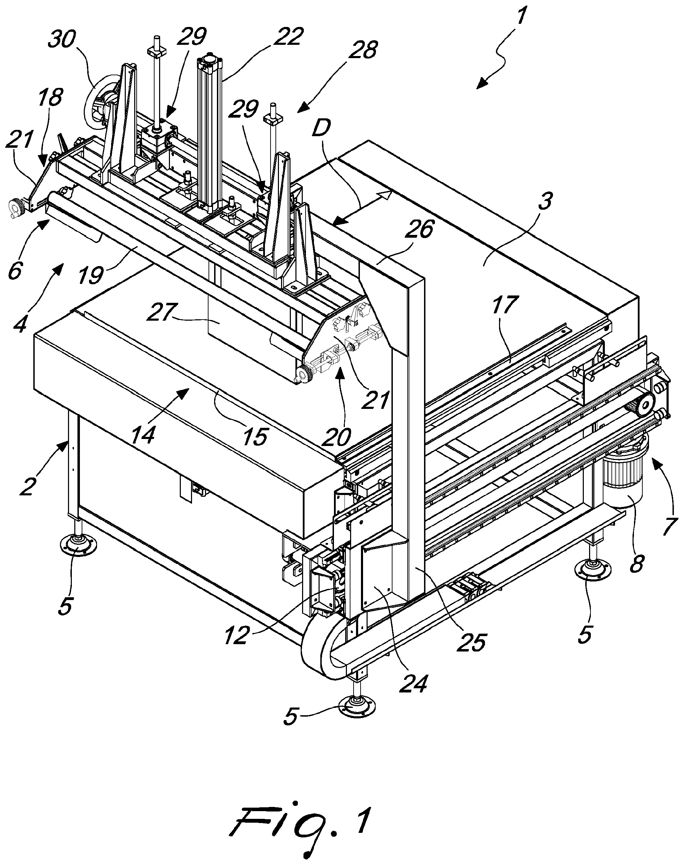

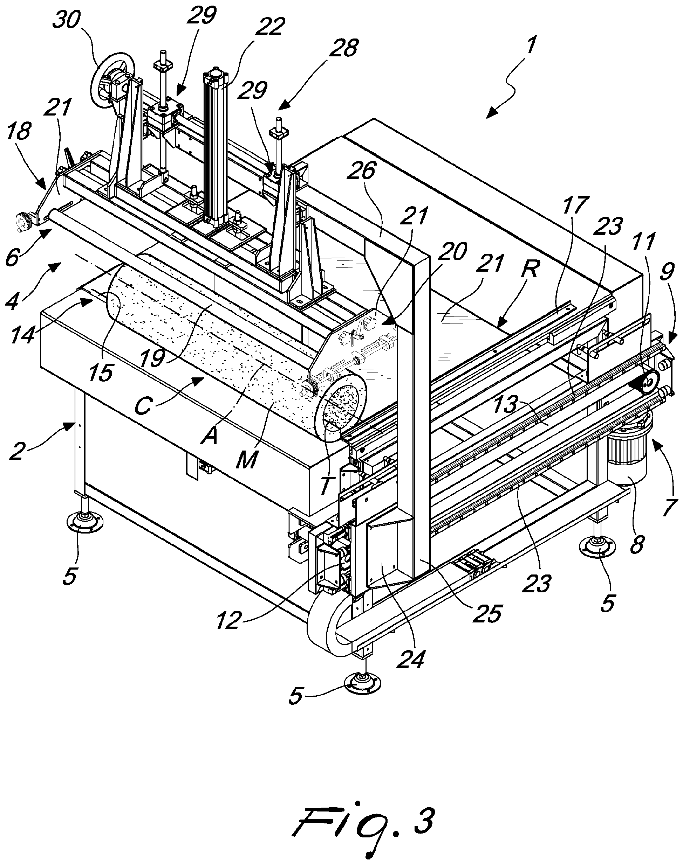

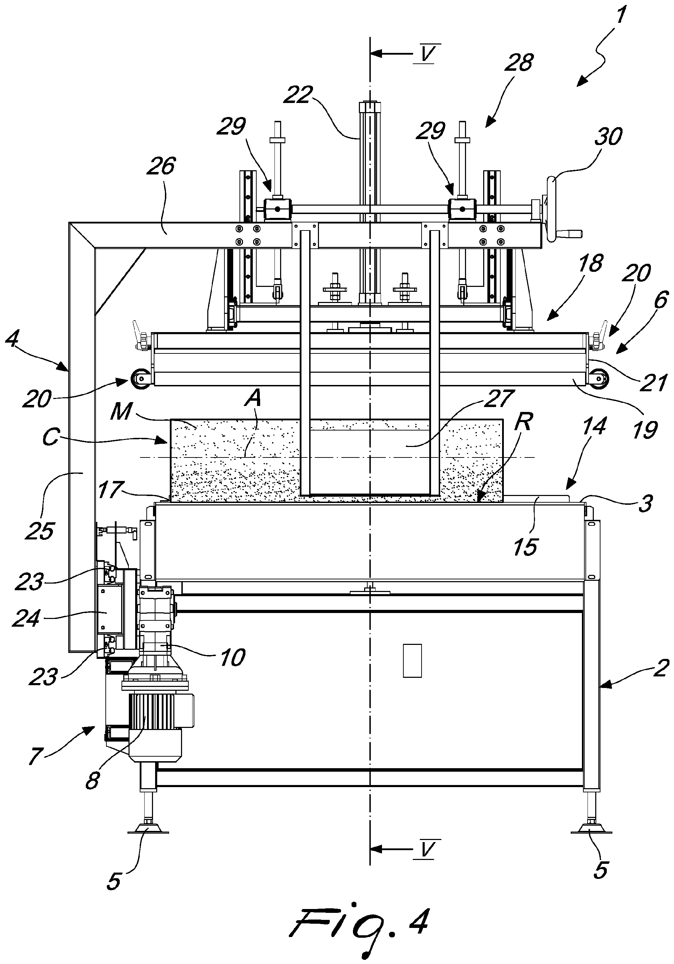

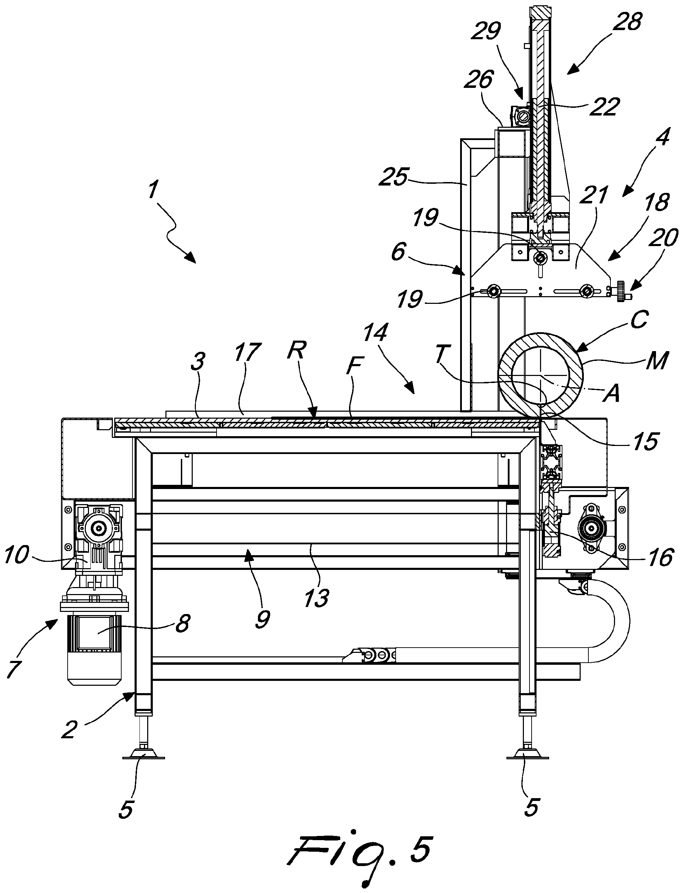

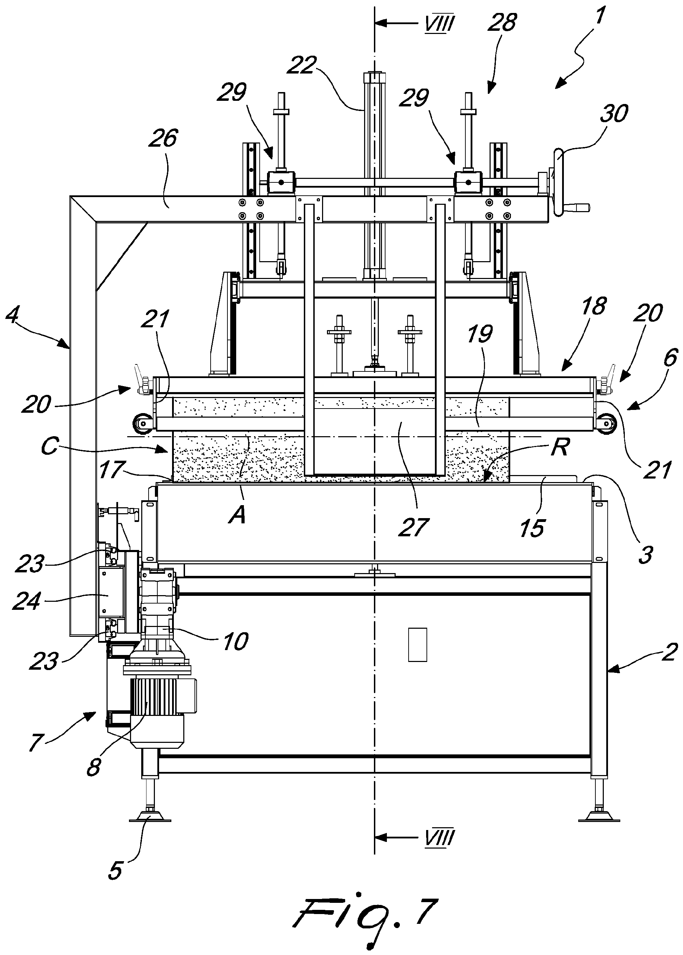

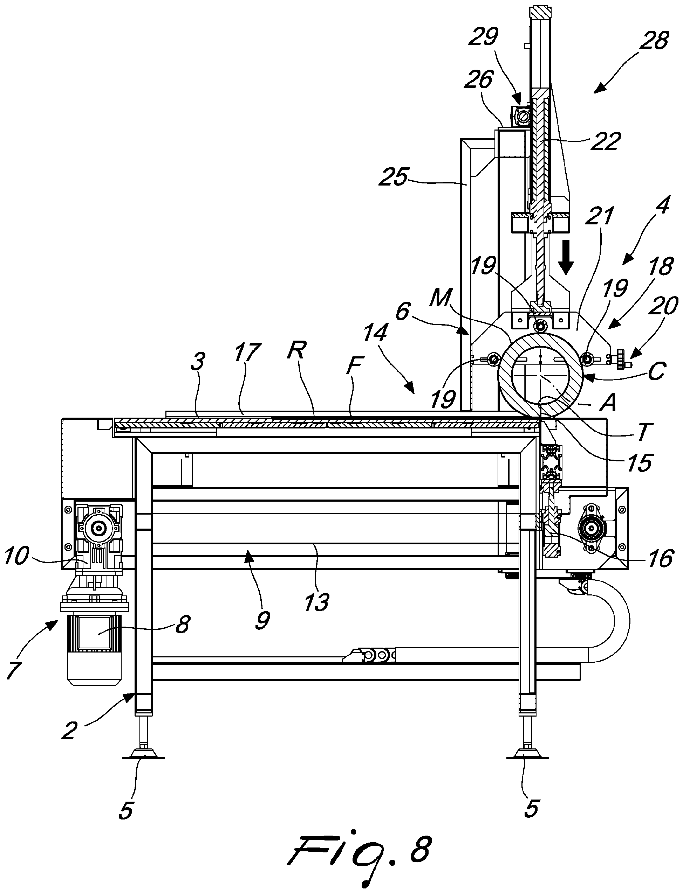

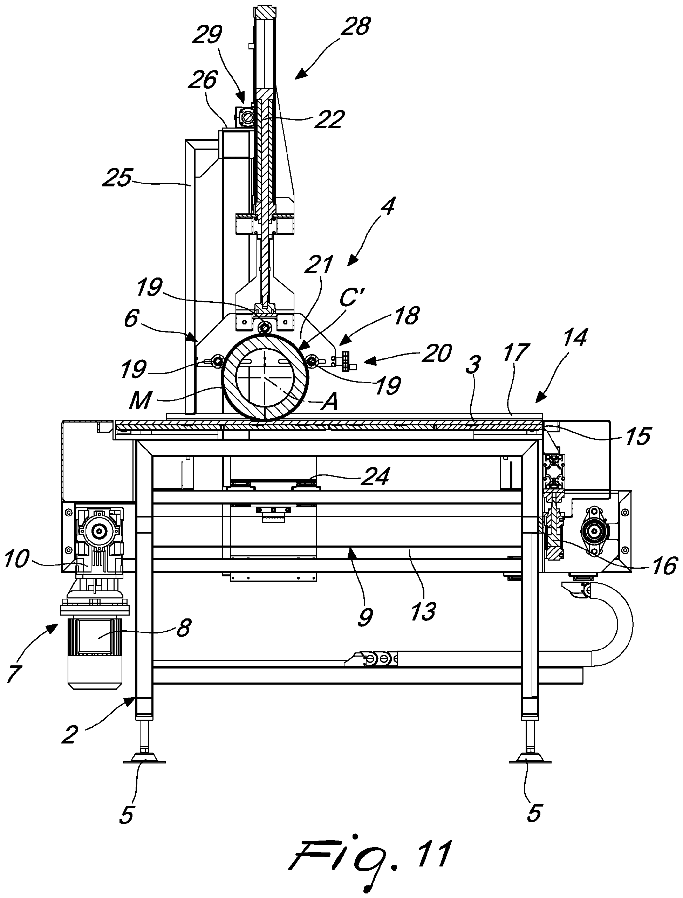

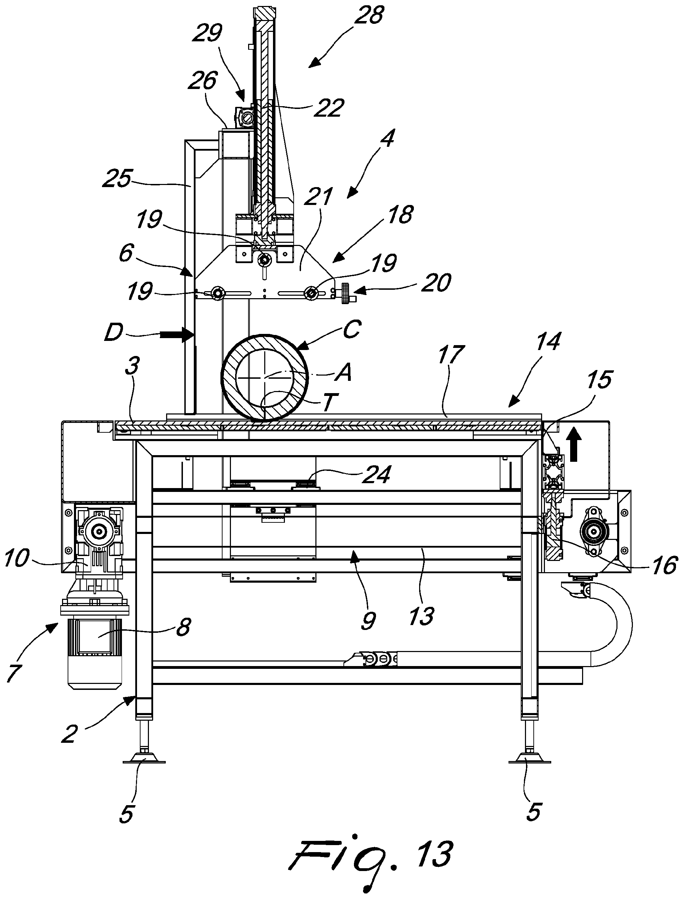

In a first embodiment of the apparatus 1 (Figures 1-13), the guiding means 6 have a supporting structure 18 for at least two idle rollers 19 which extend substantially parallel to the work surface 3 and transversely to the work direction D, and which are adapted to be arranged in external contact with the pipe section C being processed.

The idle rollers 19 are substantially horizontal and are perpendicular to the work direction D.

The at least two idle rollers 19 are adapted to be arranged preferably on opposite sides of the pipe section C.

Preferably the guiding means 6 comprise three idle rollers 19, of which the central roller is at a greater distance from the work surface 3 than the two lateral rollers.

Means 20 can also be provided for adjusting the relative position of the idle rollers 19, so as to be able to adapt their configuration as a function of the side of the pipe section C being processed.

In this case the supporting structure 18 comprises a pair of mutually opposite sides 21, with which the mutually opposite ends of the idle rollers 19 are associated so that they can rotate. The adjustment means 20, which are not described as they are conventional, make it possible to vary the position of the central idle roller 19 vertically and the position of the lateral idle rollers 18 horizontally.

The central idle roller 19 is adapted to be arranged above the pipe section C, while the idle rollers 19 are adapted to be arranged on opposite sides of the pipe section.

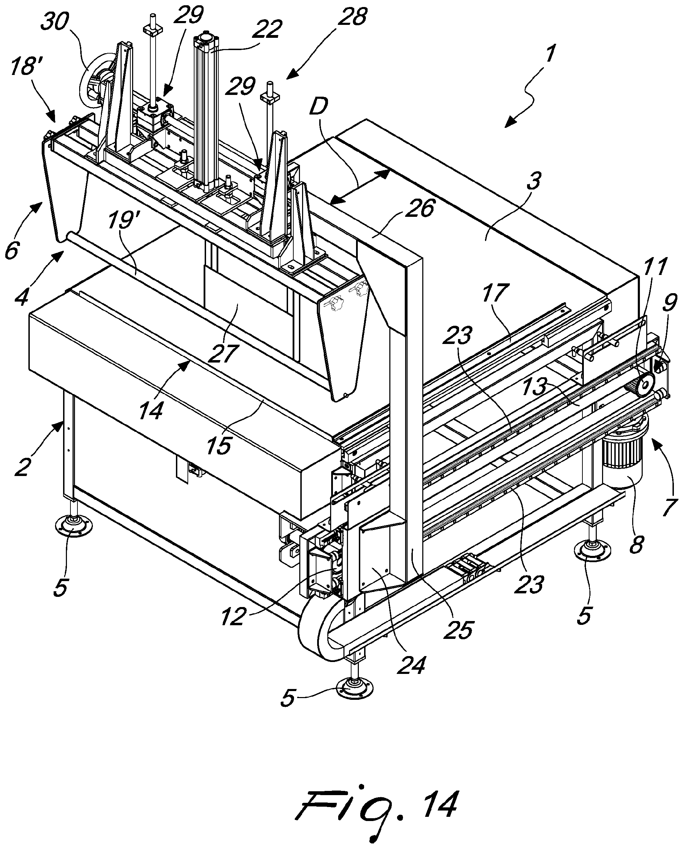

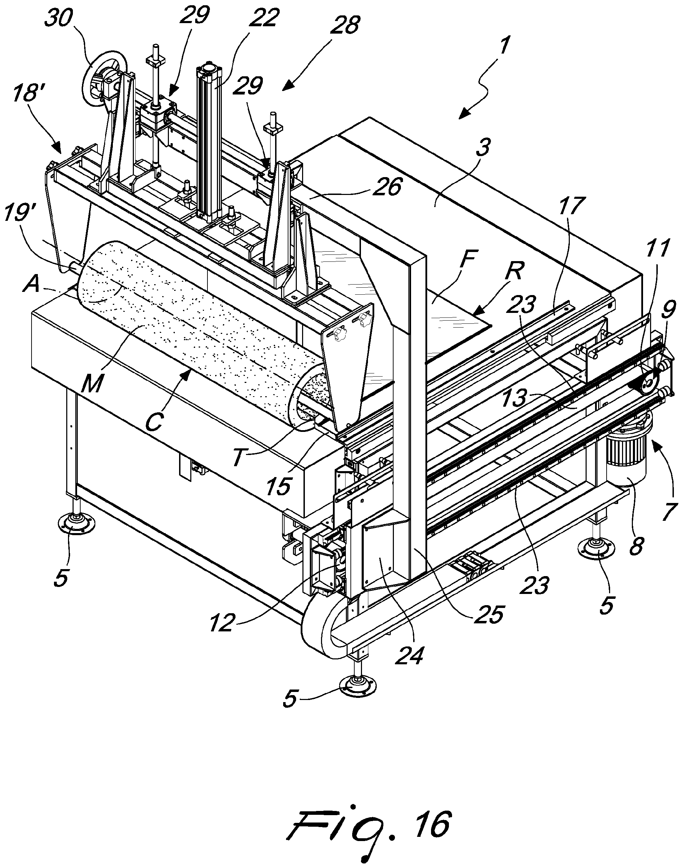

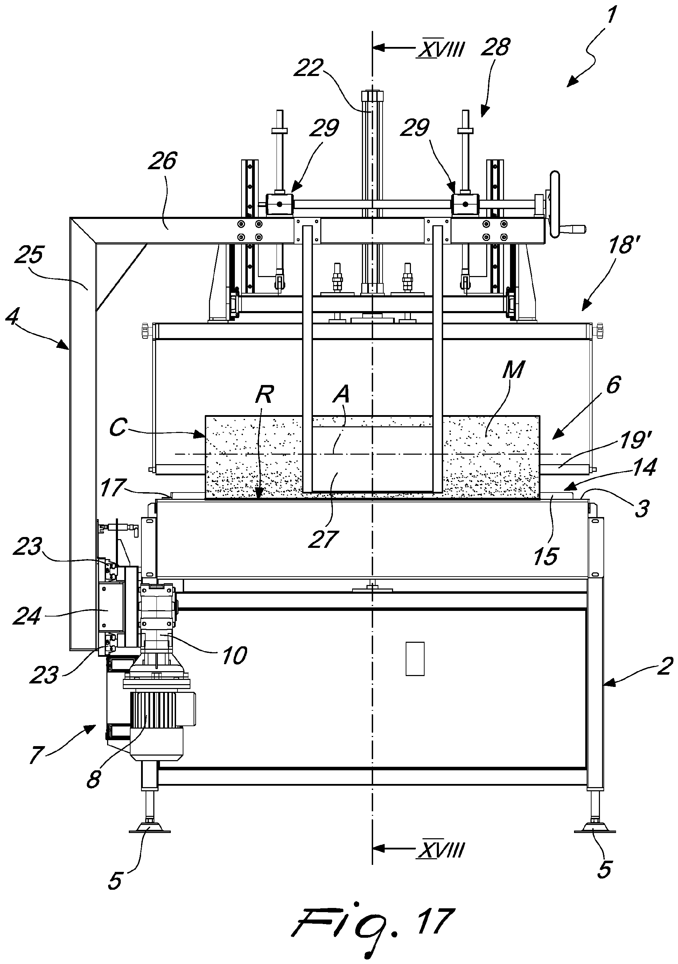

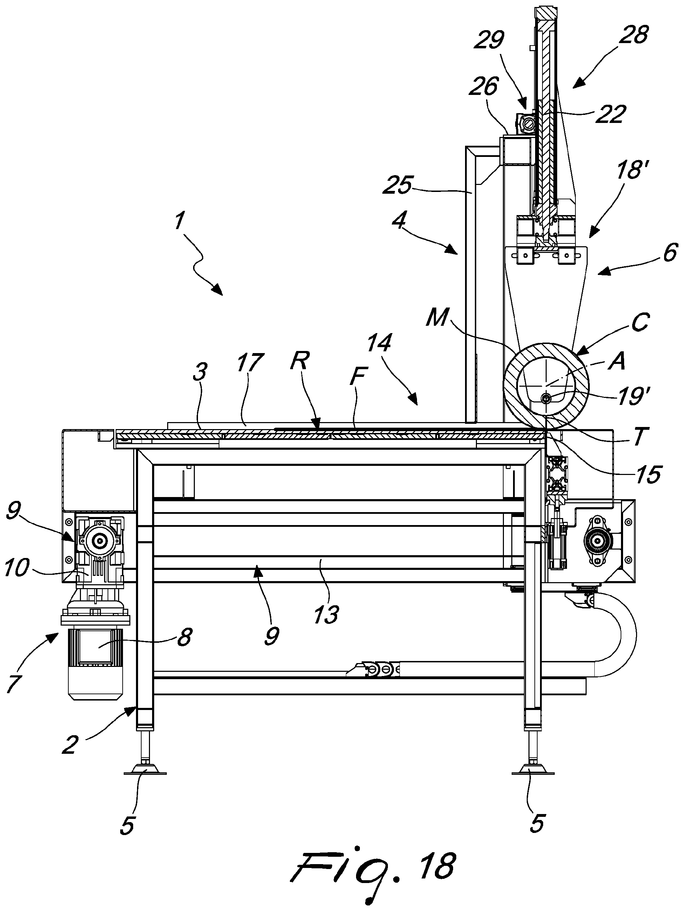

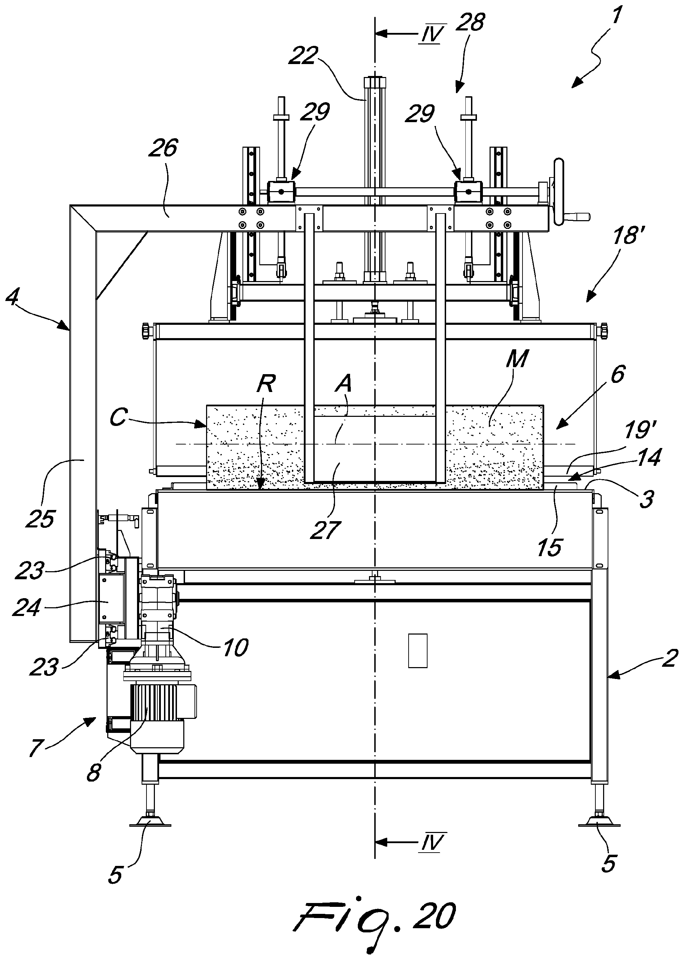

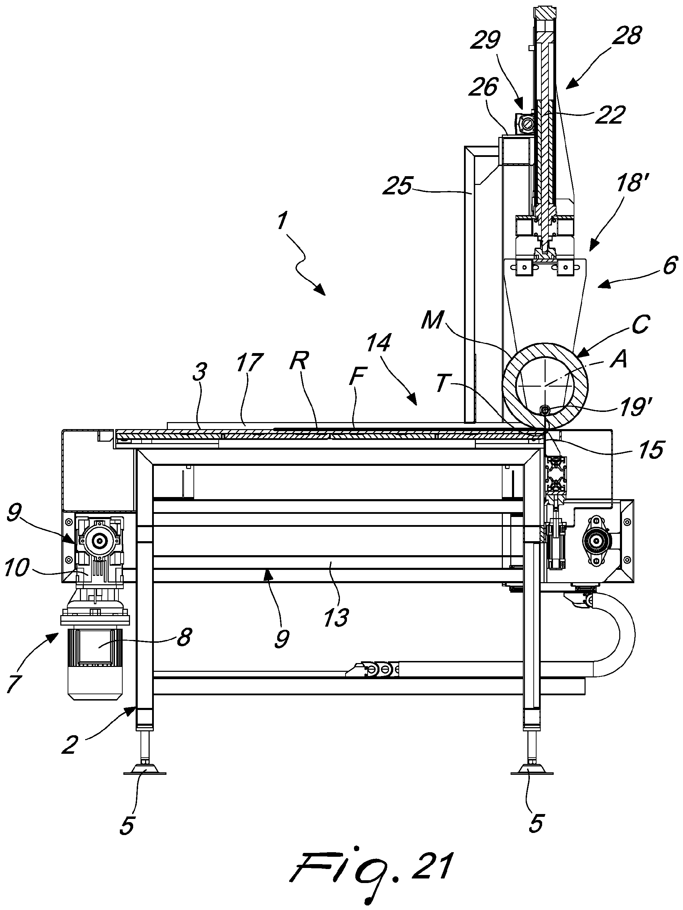

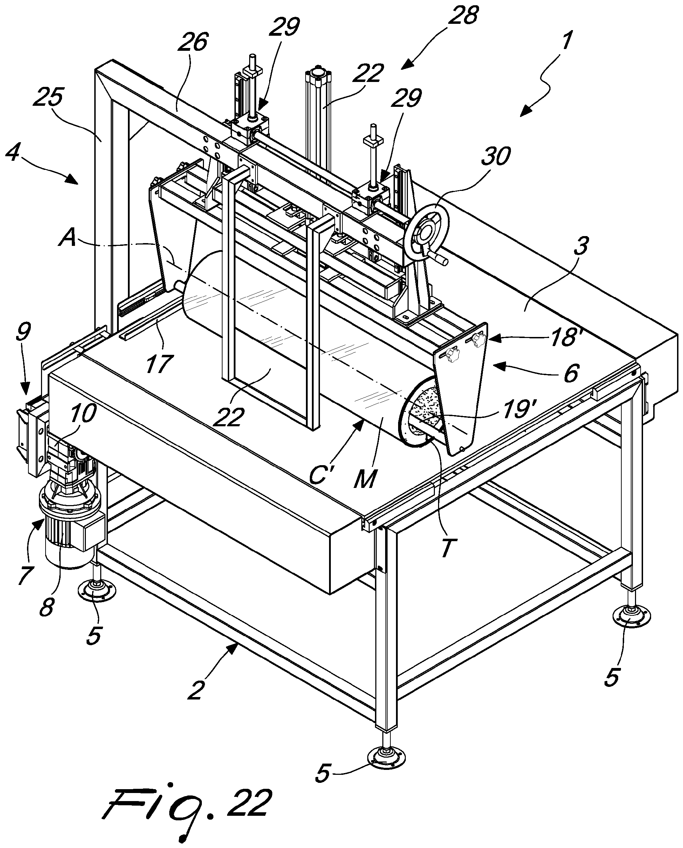

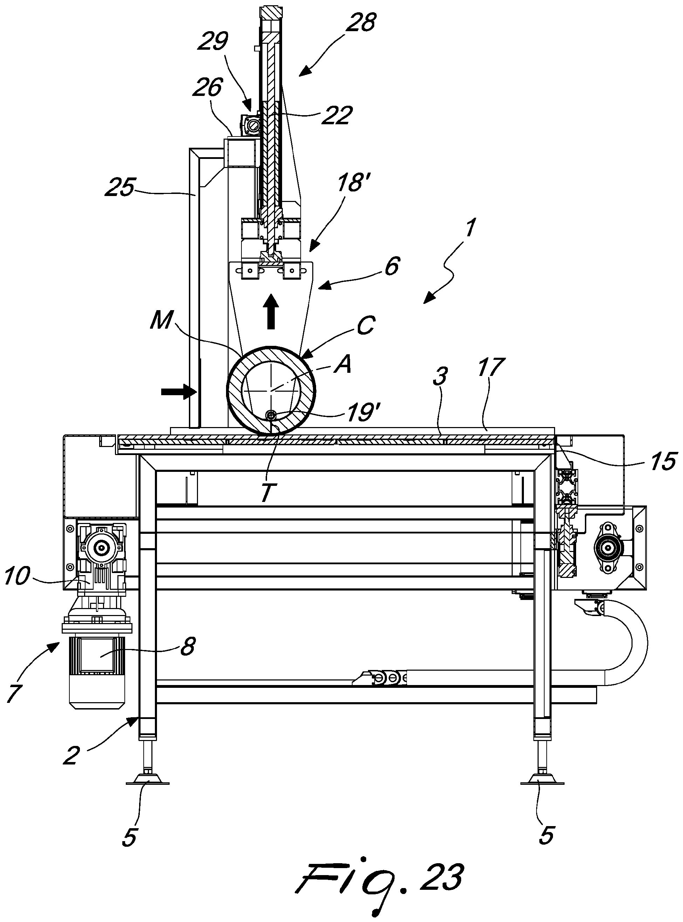

In a second embodiment (Figures 14-23), the guiding means 6 comprise a supporting structure 18' for at least one idle roller 19' which extends substantially parallel to the work surface 3 and transversely to the work direction D and is adapted to be inserted so as to pass through the pipe section C being processed. The pipe section C being processed is forced open in order to insert the idle roller 19' inside it through the T-cut.

The idle roller 19' is substantially horizontal and is perpendicular to the work direction D.

Furthermore, the transfer assembly 4 comprises second movement means 22 for moving the supporting structure 18 or 18' toward/away from the work surface 3.

Such second movement means 22 can comprise for example one or more actuators with the corresponding movable shank arranged substantially vertically.

The supporting structure 18 or 18' is associated with the cross-member 26. In more detail, the supporting structure 18 or 18' is connected to the cross-member 26 via the interposition of the second movement means 22.

Furthermore, adjustment means 28 of the elevation of the guiding means 6 with respect to the work surface 3 are provided, so as to set its working distance from the work surface as a function of the size of the pipe section C being processed. Such adjustment means 28 comprise a pair of jacks 29 which are interposed between the guiding assembly 6 and the cross-member 26 and can be actuated by way of a handwheel 30.

Finally, the guiding means 6 comprise a pusher element 27 which is adapted to accompany the pipe section C during the return stroke.

The pusher element 27 protrudes from the supporting structure 18 or 18' toward the work surface 3. The pusher element 27 is arranged in front of the supporting structure 18 or 18' along the work direction D in the direction of the wrapping stroke, so as to be able to remain in contact with the covered pipe section C' during the return stroke, accompanying it toward the initial position.

Furthermore, the apparatus 1 can be provided with adapted devices and sensors to ensure optimal safety conditions for the operators, which are not described as they are conventional.

The operation of the present invention is the following.

As a function of the size of the pipe section C being processed, the operator preliminarily sets the desired wrapping/return stroke by way of the adjustment means or selects it from a plurality of wrapping/return strokes stored in the adjustment means.

In a first operating step the profile 15 is in the active position; the covering sheet R is resting on the work surface 3 with the adhesion face F directed upward, in abutment against the profile 15 and resting against or aligned with the shoulder 17, and the pipe section C is positioned on the work surface 3 with the profile inserted along the T-cut.

If the covering sheet R is provided with a layer of thermoplastic adhesive, then activating the heating means of the work surface 3 causes this layer to soften; otherwise, a suitable glue is spread on the adhesion face F.

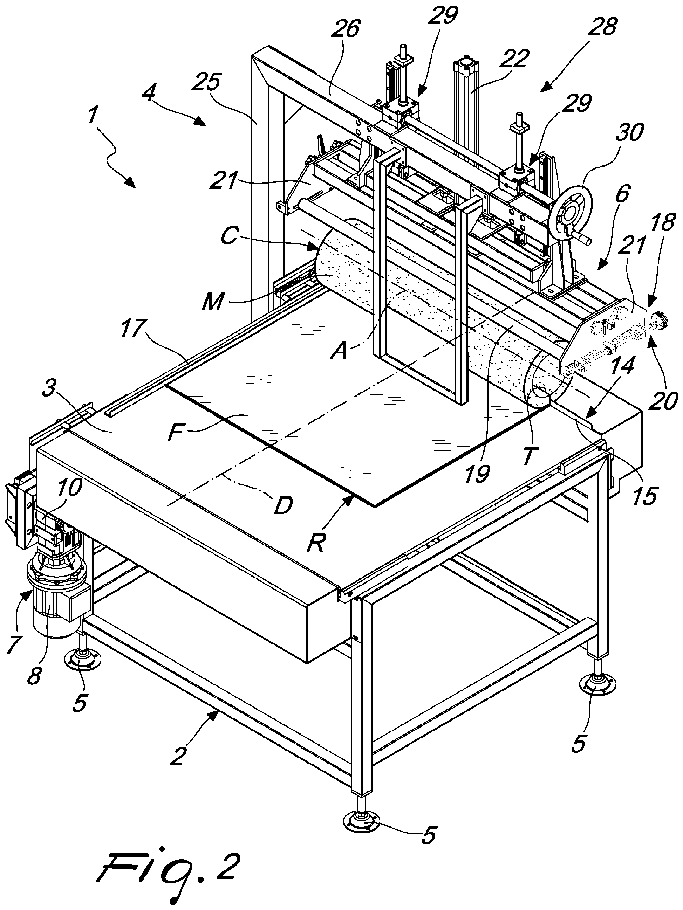

In the first embodiment of the apparatus 1 the guiding means 6 are lifted from the work surface 3 and moved away from the pipe section C (Figures 2-5).

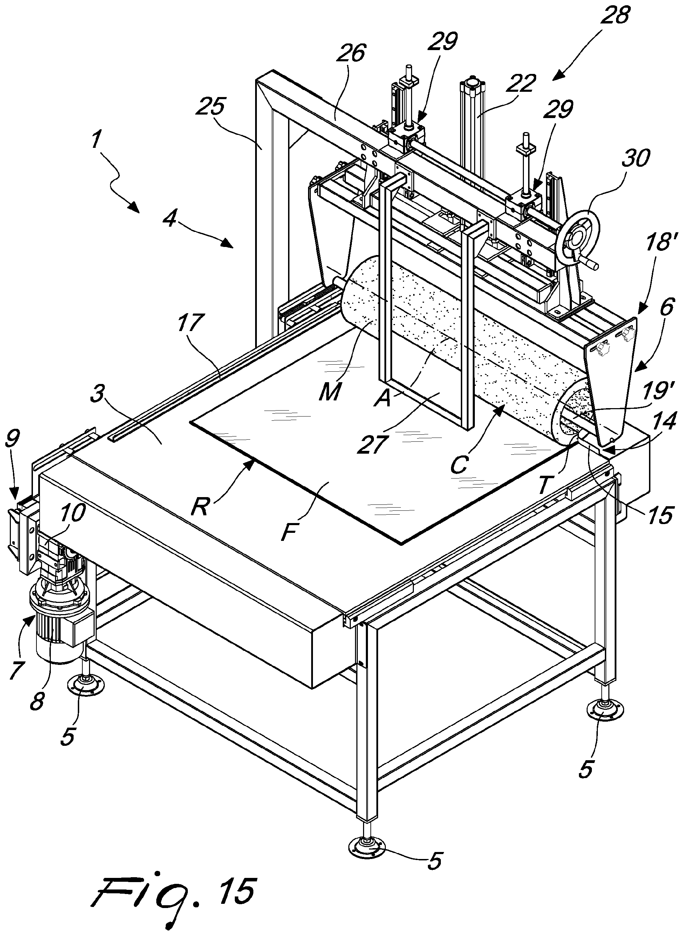

In the second embodiment the idle roller 19' is inserted so that it passes through the pipe section C and is kept spaced apart from the inner surface of the pipe section (Figures 15-18).

In a second operating step the second movement means 22 are activated in order to bring the guiding means 6 toward the work surface 3, with the profile 15 still in the active position.

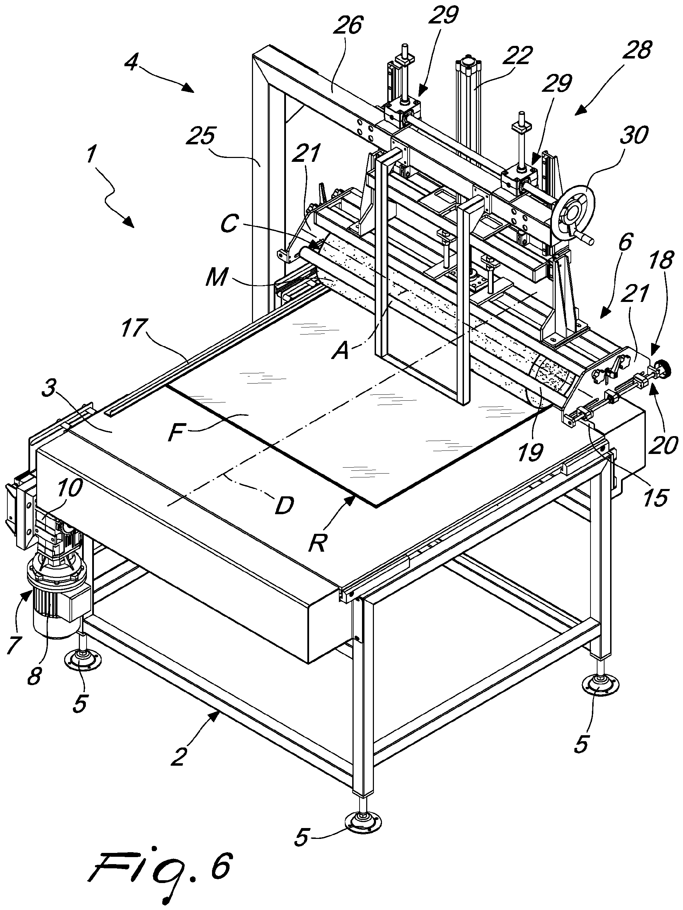

In the first embodiment the guiding means 6 are positioned with the corresponding idle rollers 19 substantially tangent, outside the cladding M (Figures 6-8).

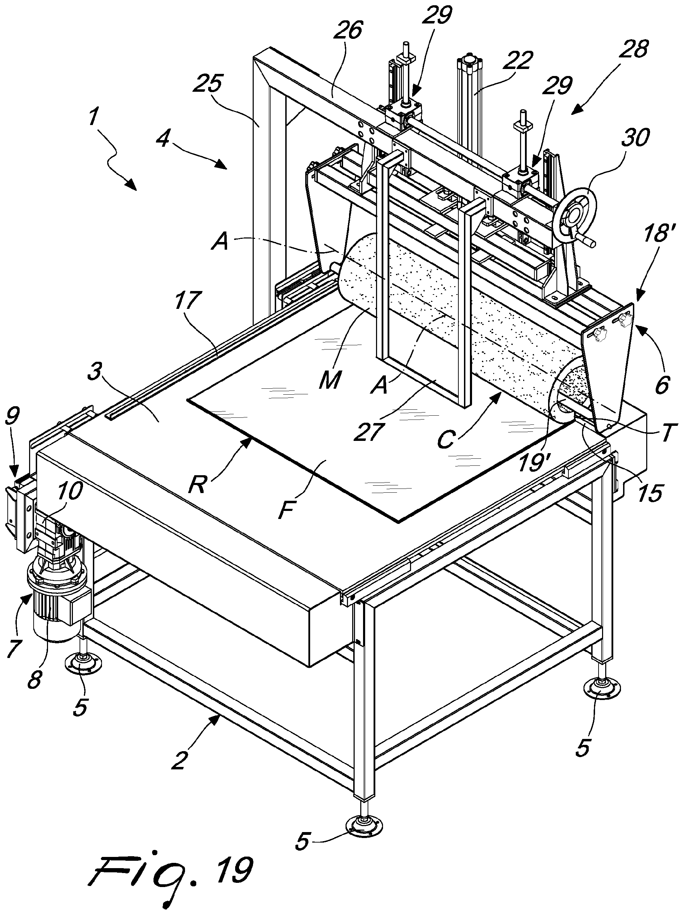

In the second embodiment the guiding means 6 are positioned with the idle roller 19' in internal contact with the cladding M (Figures 19-21).

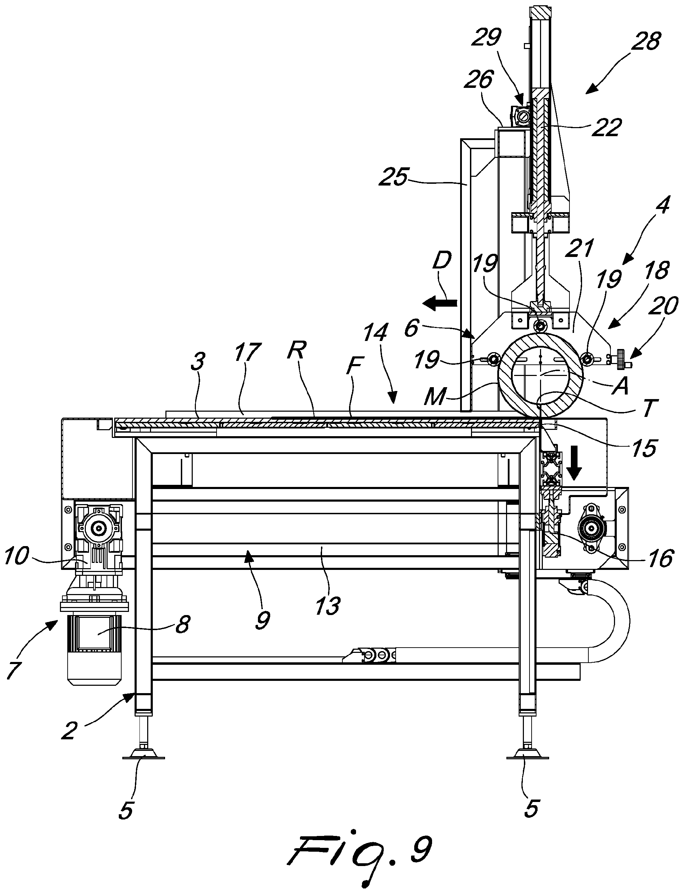

In a third operating step (Figure 9) the first movement means 16 are actuated so as to move the profile 15 to the inactive position.

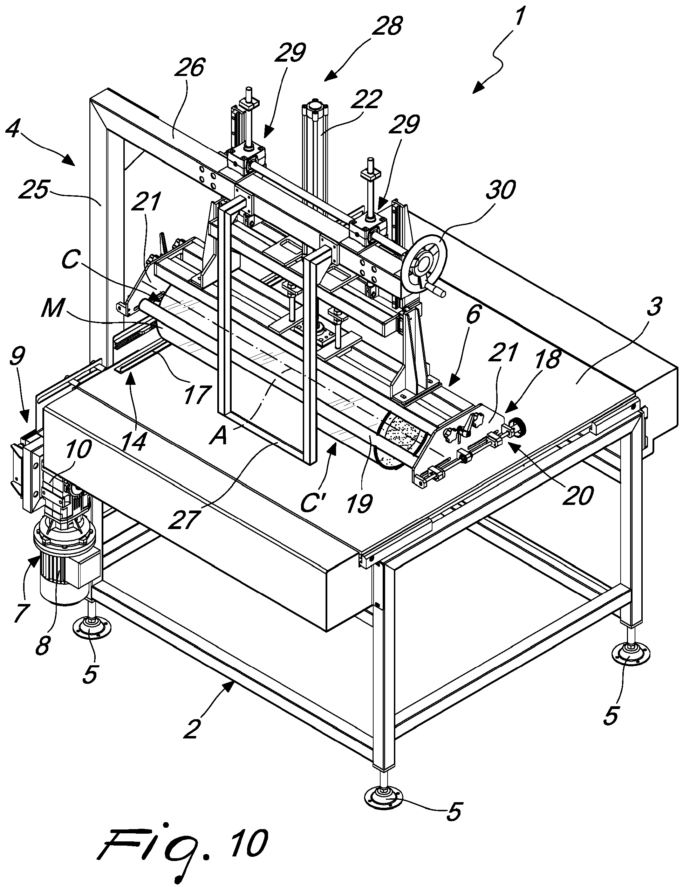

Subsequently, in a fourth operating step, the actuation means 7 are activated so as to cause the translation of the guiding means 6 along the wrapping stroke up to the final position (Figures 10-11, 22-23). In this manner the covering sheet R adheres to the pipe section C while it rolls on it, so as to obtain a covered pipe section C'.

The speed imparted by the driving element 8 to the guiding means 6 can be controlled so as to obtain an optimal adhesion of the covering sheet R and of the pipe section C.

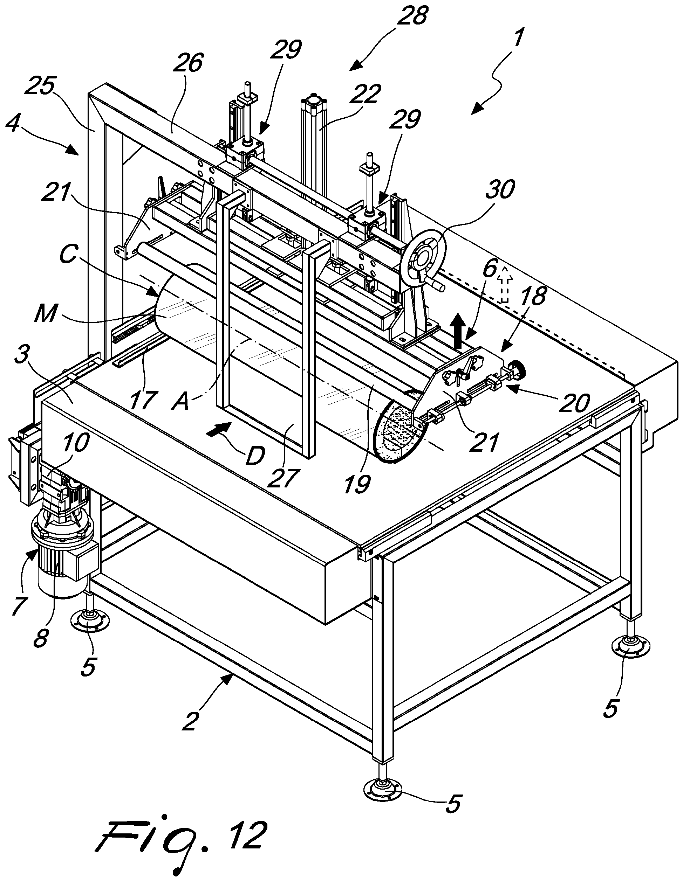

Subsequently, in a fifth operating step, the second movement means 22 are actuated so as to lift the guiding means 6 off the work surface 3, the first movement means 16 are actuated so as to return the profile 15 to the active position, and the actuation means 7 are activated so as to impart the return stroke on the guiding means 6 (Figures 12-13, 22-23). The pusher element 27 accompanies the covered pipe section C' along the return stroke toward the initial position.

In practice it has been found that the invention as described achieves the intended aim and objects and, in particular, attention is drawn to the fact that the apparatus according to the invention makes it possible to manage the movement of the pipe section as a function of the corresponding dimensions, in so doing optimizing the efficiency and productivity of the processing cycle.

Furthermore the apparatus according to the invention is flexible in use and does not place limitations on the type and format of the pipe section being processed.

Furthermore, the apparatus according to the invention makes it possible to ensure a correct initial positioning of the pipe section being processed and of the corresponding covering sheet, so as to ensure products are obtained with high and constant standards of quality.

Furthermore, the apparatus according to the present invention makes it possible to limit the activities required to the operators so as to reduce the risks thereto, speed up the processing, and obtain products of high quality.

The invention thus conceived is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements and to the state of the art, without for this reason departing from the scope of protection claimed herein.

The disclosures in Italian Patent Application No. 102023000006267 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An apparatus (1) for covering pipe sections for insulation, the pipe section (C) comprising a cladding (M) extending about a longitudinal axis (A) and provided with a longitudinal cut (T), said apparatus comprising a supporting frame (2) for supporting a work surface (3) for resting at least one covering sheet (R) made of flexible material, which has an adhesion face (F) adapted to be directed upward and has an extension at least equal to the external extension of the cladding (M) of a pipe section (C) being processed, and a transfer assembly (4) for transferring the pipe section (C) being processed which is resting on said adhesion face (F) in combined rotation and translation along a work direction (D) substantially parallel to said work surface (3), which comprises guiding means (6) for guiding the pipe section (C) being processed in rotation about its own longitudinal axis (A), which are positioned above said work surface (3), and actuation means (7) for activating said guiding means (6) in translation along at least one wrapping stroke that lies along said work direction (D),
**characterized in that** said transfer assembly (4) comprises adjustment means which are functionally associated with said actuation means (7) so as to obtain a variation of the wrapping stroke imparted to said guiding means (6).

2. The apparatus (1) according to claim 1, **characterized in that** said actuation means (7) are of the bidirectional type and are adapted to impart to said guiding means (6) also a return stroke which lies along said work direction (D) in the opposite direction to the wrapping stroke.

3. The apparatus (1) according to claim 1 or 2, **characterized in that** said actuation means (7) comprise a driving element (8) and a transmission assembly (9) which is associated in input with said driving element (8) and in output with said guiding means (6), the adjustment means being functionally associated with the driving element (8).

4. The apparatus (1) according to claim 3, **characterized in that** said driving element (8) comprises a rotating shaft and **in that** said transmission assembly (9) comprises a driving pulley (11) coupled to said rotating shaft and at least one driven pulley (12) on which a flexible transmission element (13) is wound which is closed on itself in a loop and is associated with said guiding means (6).

5. The apparatus (1) according to claim 3 or 4, **characterized in that** said driving element (8) is of the variable-speed type.

6. The apparatus (1) according to one or more of the preceding claims, **characterized in that** it comprises reference means (14) for the initial positioning of the covering sheet (R) and/or pipe section (C) being processed.

7. The apparatus (1) according to claim 6, **characterized in that** said reference means (14) comprise a profile (15) which extends substantially transversely to said work direction (D).

8. The apparatus (1) according to claim 7, **characterized in that** said profile (15) is movable between an active position, in which it protrudes above said work surface (3), and an inactive position.

9. The apparatus (1) according to claim 6, **characterized in that** said reference means (14) comprise at least one guiding shoulder (17) which extends substantially parallel to said work direction (D) and protrudes above said work surface (3).

10. The apparatus (1) according to one or more of the preceding claims, **characterized in that** it comprises heating means associated with said work surface (3) for transmitting heat to the covering sheet (R) resting thereon.

11. The apparatus (1) according to one or more of the preceding claims, **characterized in that** said guiding means (6) comprise a supporting structure (18) for at least two idle rollers (18) which extend substantially parallel to said work surface (3) and are transverse to said work direction (D), and which are adapted to be arranged externally to the pipe section (C) being processed.

12. The apparatus (1) according to claim 11, **characterized in that** said guiding means (6) comprise three of said idle rollers (19), the central roller being arranged at a greater distance from the work surface (3) than the two lateral rollers.

13. The apparatus (1) according to claim 11 or 12, **characterized in that** said guiding means (6) comprise adjustment means (20) for adjusting the relative position of said at least two idle rollers (19).

14. The apparatus (1) according to one or more of claims 1 to 10, **characterized in that** said guiding means (6) comprise a supporting structure (18') for at least one idle roller (19') which extends substantially parallel to said work surface (3) and transversely to said work direction (D) and is adapted to be inserted so as to pass through the pipe section (C) being processed.

15. The apparatus (1) according to one or more of the preceding claims, **characterized in that** it comprises second movement means (22) for moving said guiding means (6) toward/away from said work surface (3).

16. The apparatus (1) according to one or more of the preceding claims, **characterized in that** said guiding means (6) comprise a pusher element (27) which is adapted to abut against the covered pipe section (C') during the return stroke.
